# EUROPÄISCHE PATENTANMELDUNG

(11) **EP 2 806 527 A1**
(43) Veröffentlichungstag der Anmeldung: **26.11.2014**
(21) Anmeldenummer: 13168691.7
(22) Anmeldetag: 22.05.2013
(51) Int. Cl.: H02J 7/02, H01F 38/14

(54) **Anordnung mit einem mobilen elektronischen Gerät und mit einer Ladestation**

(71) Anmelder: Siemens Aktiengesellschaft, 80333 München (DE)
(72) Erfinder: Jülg, Edmund, 76534 Baden-Baden (DE)

(57) **Zusammenfassung**

Die Erfindung betrifft ein mit einem wiederaufladbaren Energiespeicher versehenes mobiles elektronisches Gerät (2) und eine Ladestation (1) zum Aufladen des Energiespeichers. Das Gerät (2) ist dazu ausgebildet, Energie (4) drahtlos zu empfangen und der Ladestation (1) drahtlos Informationen (3) über Position und Lage des Gerätes (2) in einem Raum und über Ladeparameter des Energiespeichers zu übermitteln. Die Ladestation (1) empfängt die Informationen (3) drahtlos, wertet sie aus und lädt mittels einer gerichteten drahtlosen Energieübertragung (z.B. Licht oder Funk) (4) den Energiespeicher auf. Dadurch wird das Aufladen des Energiespeichers des elektronischen Gerätes (2) vereinfacht.

## Beschreibung

Die Erfindung betrifft eine Anordnung mit einem mit einem wiederaufladbaren Energiespeicher versehenen mobilen elektronischen Gerät und mit einer Ladestation zum Aufladen des Energiespeichers. Ferner betrifft die Erfindung ein mobiles elektronisches Gerät und darüber hinaus eine Ladestation für eine derartige Anordnung.

Ein derartige Anordnung, eine derartige Ladestation sowie ein derartiges elektronische Gerät, z. B. ein Gerät in Form eines Notebooks bzw. Laptops, eines Smartphones oder Tablet-PCs, sind allgemein bekannt. Das elektronische Gerät weist einen Energiespeicher bzw. Akku auf, der zur Versorgung von elektrischen Komponenten des Gerätes mit elektrischer Energie vorgesehen ist und der mittels der Ladestation in Form eines Netzteils oder in Form eines Ladegerätes geladen wird. Im zuletzt genannten Fall wird zum Laden des einen oder mehrerer Akkus das elektronische Gerät in die Ladestation eingesetzt bzw. gesteckt. Nachteilig ist, dass ein Anwender gewöhnlich die Ladestation zusammen mit dem elektronischen Gerät mitführen muss, um im Bedarfsfall - gewöhnlich bereits nach wenigen Stunden - den Energiespeicher des elektronischen Gerätes wieder aufladen zu können.

Der Erfindung liegt daher die Aufgabe zugrunde, eine Anordnung der eingangs genannten Art zu schaffen, welches ein Aufladen des Energiespeichers des elektronischen Gerätes vereinfacht. Darüber hinaus sind ein geeignetes mobiles elektronisches Gerät und eine geeignete Ladestation für eine derartige Anordnung anzugeben.

Diese Aufgabe wird im Hinblick auf die Anordnung durch die im kennzeichnenden Teil des Anspruchs 1 angegebenen, in Bezug auf das elektronische Gerät durch die im kennzeichnenden Teil des Anspruchs 2 angegebenen und bezüglich der Ladestation durch die im kennzeichnenden Teil des Anspruchs 3 angegebenen Maßnahmen gelöst.

Vorteilhaft ist, dass zum Laden des elektronischen Gerätes auf eine Verkabelung verzichtet werden kann, wobei ferner eine Ladestation ausreicht, um eine Vielzahl von derartigen Geräten kabellos aufladen zu können.

Das elektronische Gerät und die Ladestation tauschen vor dem eigentlichen Ladevorgang Informationen aus. Dazu übermittelt das zu ladende Gerät der Ladestation Informationen über den Standort bzw. die Position und die Lage einer Energie-Empfangseinrichtung des Gerätes innerhalb eines Raumes sowie über den Ladezustand des Gerätes - z. B. über die noch verfügbare Akku-Kapazität bzw. über die verbleibende Restlaufzeit des Gerätes - und über dessen Ladeleistung. Dadurch sind der Ladestation die Informationen im Hinblick auf die Position des Gerätes sowie die Eigenschaften bezüglich Ladezustand und Ladeleistung bekannt. Aufgrund dieser Informationen richtet die Ladestation eine Energie-Sendeeinrichtung zu der Energie-Empfangseinrichtung des Gerätes derart aus, dass eine gerichtete drahtlose Energieübertragung mit hohem Wirkungsgrad erzielt wird, wobei Höhe der Energie- bzw. Leistungsabgabe sowie Zeitdauer dieser Abgabe die Ladestation nach Maßgabe der zugeführten Informationen bezüglich des Ladezustands und der Ladeleistung ermittelt. Als gerichtete drahtlose Energie- bzw. Leistungsübertragung ist eine Übertragung mittels elektromagnetischer oder magnetischer Wellen oder mittels optischer oder infraroter Strahlung vorgesehen.

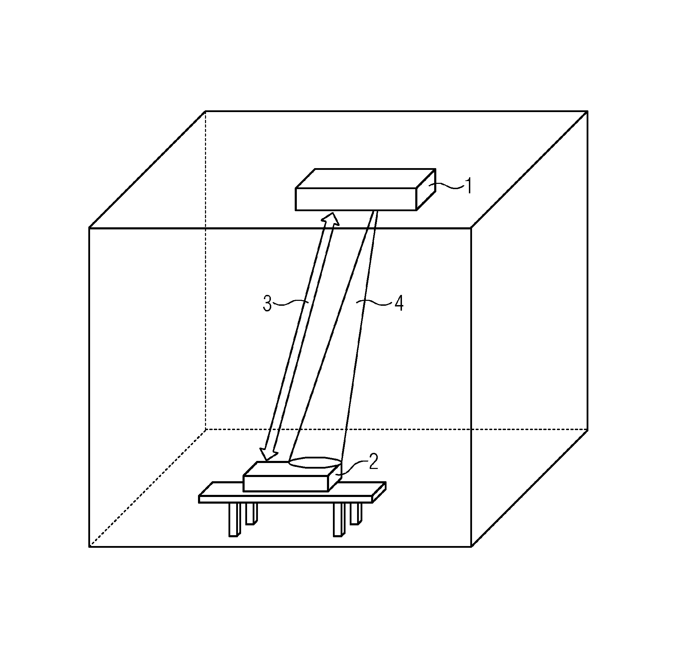

Die Erfindung wird nachfolgend anhand eines Ausführungsbeispiels unter Bezugnahme auf die einzige Figur der Zeichnung näher erläutert. Die Figur der Zeichnung zeigt in vereinfachter Form eine Anordnung mit einem mit einem wiederaufladbaren Energiespeicher versehenen mobilen elektronischen Gerät und mit einer Ladestation zum Aufladen des Energiespeichers.

An einer Decke eines Raumes oder Gebäudes ist eine Ladestation 1 angeordnet, die zur drahtlosen Energieversorgung von mobilen elektronischen Geräten vorgesehen ist. Im vorliegenden Ausführungsbeispiel wird angenommen, dass ein Energiespeicher eines Gerätes 2 drahtlos aufzuladen ist. Dazu weist das Gerät 2 einerseits eine Sende- und Empfangseinrichtung zur drahtlosen Übermittlung von Informationen 3 zu einer Sende- und Empfangseinrichtung der Ladestation 1 und andererseits eine Energie-Empfangseinrichtung zum drahtlosen Empfang der von der Ladestation dem Gerät 2 übertragenen Energie 4 auf. Die dem Ladegerät 1 übermittelten Informationen umfassen den Standort des Geräte-Energiespeichers bzw. die Position und die Lage des Geräte-Energiespeichers im Gebäude oder im Raum sowie die Ladeparameter des Geräte-Energiespeichers, insbesondere die Ladeparameter in Form der noch verfügbaren Akku-Kapazität bzw. der noch verbleibenden Restlaufzeit des Gerätes und über die Ladespannung, den Ladestrom und die Dauer der Aufladung des Geräte-Energiespeichers. Selbstverständlich können zwischen der Ladestation 1 und dem Gerät 2 weitere Informationen ausgetauscht werden, beispielsweise derart, dass die Ladestation 1 dem Gerät 2 den Startzeitpunkt eines Ladevorgangs meldet. Die Ladestation 1 wertet diese Informationen aus, richtet nach Maßgabe der Informationen bezüglich des Standorts bzw. der Position und Lage des Geräte-Energiespeichers eine Energie-Erzeugungs- und Übertragungseinrichtung derart aus, dass dem Geräte-Energiespeicher mittels gerichteter Übertragung Energie zugeführt wird. Dabei wird eine gerichtete Energieübertragung z. B. mittels eines gerichteten Lichtstrahls (Laser, Infrarot) bewerkstelligt, dessen Licht durch die geeigneten Photozellen der Energie-Empfangseinrichtung des Gerätes 2 in Energie umgewandelt wird, wobei die Ladestation 1 die Höhe der abzugebenden Energieform sowie Zeitdauer der Abgabe nach Maßgabe der zugeführten Informationen bezüglich der Ladespannung, des Ladestroms und der Dauer der Aufladung des Geräte-Energiespeichers ermittelt.

Die Erfindung lässt sich damit wie folgt zusammenfassen: Eine Anordnung mit einem mit einem wiederaufladbaren Energiespeicher versehenen mobilen elektronischen Gerät 2 und mit einer Ladestation 1 zum Aufladen des Energiespeichers, zeichnet sich dadurch aus, dass
- das Gerät 2 dazu ausgebildet ist, Energie drahtlos zu empfangen und der Ladestation 1 drahtlos Informationen über Position und Lage des Gerätes 2 in einem Raum und über Ladeparameter des Energiespeichers zu übermitteln, und
- die Ladestation 1 dazu ausgebildet ist, die Informationen drahtlos zu empfangen sowie auszuwerten und mittels einer gerichteten drahtlosen Energieübertragung den Energiespeicher aufzuladen.

Mittels einer derartigen Anordnung wird das Aufladen des Energiespeichers des elektronischen Gerätes 2 vereinfacht.

## Patentansprüche

1. Anordnung mit einem mit einem wiederaufladbaren Energiespeicher versehenen mobilen elektronischen Gerät und mit einer Ladestation zum Aufladen des Energiespeichers, **dadurch gekennzeichnet, dass**
- das Gerät dazu ausgebildet ist, Energie drahtlos zu empfangen und der Ladestation drahtlos Informationen über Position und Lage des Gerätes in einem Raum und über Ladeparameter des Energiespeichers zu übermitteln, und
- die Ladestation dazu ausgebildet ist, die Informationen drahtlos zu empfangen sowie auszuwerten und mittels einer gerichteten drahtlosen Energieübertragung den Energiespeicher aufzuladen.

2. Mit einem mit einem wiederaufladbaren Energiespeicher versehenes mobiles elektronisches Gerät für eine Anordnung nach Anspruch 1, **dadurch gekennzeichnet, dass** das Gerät dazu ausgebildet ist, einer Ladestation drahtlos Informationen über Position und Lage des Gerätes in einem Raum und über Ladeparameter des Energiespeichers zu übermitteln und ferner dazu ausgebildet ist, von der Ladestation dem Gerät übermittelte Energie drahtlos zu empfangen.

3. Ladestation für eine Anordnung nach Anspruch 1, **dadurch gekennzeichnet, dass** die Ladestation dazu ausgebildet ist, Informationen über Position und Lage in einem Raum eines mit einem wiederaufladbaren Energiespeicher versehenen mobilen elektronischen Gerätes und über Ladeparameter des Energiespeichers drahtlos zu empfangen sowie auszuwerten und mittels einer gerichteten drahtlosen Energieübertragung den Energiespeicher aufzuladen.
